# EUROPÄISCHE PATENTANMELDUNG

(11) **EP 0 931 678 A2**
(43) Veröffentlichungstag der Anmeldung: **28.07.1999**
(21) Anmeldenummer: 99100934.1
(22) Anmeldetag: 20.01.1999
(51) Int. Cl.: B60C 19/08, B29D 30/52

(54) **Fahrzeugreifen**

(30) Priorität: 21.01.1998 DE 19802088
(71) Anmelder: Continental Aktiengesellschaft, 30165 Hannover (DE)
(72) Erfinder: Poqué, Hartwig, 52076 Aachen (DE); Fischer, Stefan, 30459 Hannover (DE); Busmann, Dirk Dr., 30165 Hannover (DE); Münte, Markus, 30173 Hannover (DE); Koch, Thomas, 4600 Wels (AT)

(57) **Zusammenfassung**

Die Erfindung bezieht sich auf einen Fahrzeugreifen zur Montage auf eine elektrisch leitende Felge, der eine radial äußere Laufgummischicht aufweist, die einen spezifischen elektrischen Widerstand >10¹⁰ Ohm x cm besitzt. Um Fahrzeugreifen bereitzustellen, die eine ausreichende Leitfähigkeit aufweisen, bei der die Herstellung des Laufstreifens ohne Schwierigkeiten im Extrusionsprozeß erfolgt und gleichzeitig keine Einbußen im Fahrverhalten der Reifen zu verzeichnen sind, wird vorgeschlagen, daß die schlecht leitende radial äußere Laufgummischicht zumindest eine in Reifenumfangsrichtung umlaufende radial außen die Fahrbahn berührende und radial innen mit zumindest einen Teil des Reifens, der einen spezifischen elektrischen Widerstand < 10⁸ Ohm x cm aufweist, in Verbindung stehende filmschichtartige Zone aufweist, deren Werkstoff einen spezifischen elektrischen Widerstand < 10⁸ Ohm x cm besitzt, die bei der Herstellung des Reifens durch eine auf Trennflächen des Laufstreifens aufgebrachte Lösung aus Kautschuk und/oder Kunststoff erzeugt worden ist.

## Beschreibung

Die Erfindung betrifft ein Fahrzeugreifen zur Montage auf eine elektrisch leitende Felge, der eine radial äußere Laufgummischicht aufweist, die einen spezifischen elektrischen Widerstand >10¹⁰ Ohm x cm besitzt.

Bei einem Fahrzeug besteht im allgemeinen das Problem, daß es während des Fahrbetriebes elektrisch aufgeladen wird. Eine ausreichende Ableitung der elektrostatischen Ladungen ist aber nur dann gegeben, wenn die Aufstandsfläche des Reifens ausreichend leitfähig ist und mit der Fahrbahn stetigen Kontakt hat. Wenn das nicht der Fall ist, können unangenehme Entladungen eintreten. Insbesondere bei kieselsäurehaltigen Laufflächen, die dem Reifen an sich gute Fahreigenschaffen wie einen geringen Rollwiderstand und gute Naßrutscheigenschaften verleihen, ist deren niedrige elektrische Leitfähigkeit eine mischungsbedingte nachteilige physikalische Eigenschaft. In der Vergangenheit hat es nicht an Versuchen gemangelt, die elektrische Leitfähigkeit von kieselsäurehaltigen Reifenlaufstreifen zu erhöhen. Derartige Maßnahmen sind z. B. aus der EP 0 658 452 A1 oder aus der EP 0 718 127 A1 bekannt. Die Herstellung der dort beschriebenen Laufstreifen erfolgt im allgemeinen in einem Mehrfachextruder. Für diese Extrusion sind aufwendige Extruder erforderlich, die insbesondere bei der Variante der EP 718 127 A1 komplizierte Mundstücke aufweisen müssen. Des Weiteren ermöglicht diese Herstellungsvariante nur die Bereitstellung von Laufstreifen, die bezogen auf die Axialerstreckung im Reifen relativ breite leitende Streifen aufweisen. Das allerdings hat den Nachteil, daß die Gummimischung des leitfähigen Streifens dann auch einen Einfluß auf die Fahreigenschaften des Reifens hat, was oftmals nicht erwünscht ist.

Der vorliegenden Anmeldung liegt die Aufgabe zugrunde, einen Fahrzeugreifen, der eine ausreichende Leitfähigkeit aufweist, bereitzustellen, bei dem die Herstellung des Laufstreifens ohne Schwierigkeiten im Extrusionsprozeß erfolgt und gleichzeitig keine Einbußen im Fahrverhalten des Reifens zu verzeichnen sind.

Gelöst wird diese Aufgabe erfindungsgemäß dadurch, daß die schlecht leitende (spezifischer elektrischer Widerstand > 10¹⁰ Ohm x cm) radial äußere Laufgummischicht zumindest eine in Reifenumfangsrichtung umlaufende radial außen die Fahrbahn berührende und radial innen mit zumindest ein Teil des Reifens, der einen spezifischen elektrischen Widerstand < 10⁸ Ohm x cm aufweist, in Verbindung stehende filmschichtartige Zone aufweist, deren Werkstoff einen spezifischen elektrischen Widerstand < 10⁸ Ohm x cm besitzt, die bei der Herstellung des Reifens durch eine auf Trennflächen des Laufstreifens aufgebrachte Lösung aus Kautschuk und/oder Kunststoff erzeugt worden ist.

Der Vorteil einer bei der Herstellung des Reifens durch eine auf Trennflächen des Laufstreifens filmschichtartig aufgebrachte Lösung aus Kautschuk und/oder Kunststoff besteht darin, daß der Anteil der mit der Fahrbahn in Berührung kommenden Fläche mit der Gummimischung vergrößert werden konnte, deren Eigenschaften hinsichtlich ihrer mechanischen bzw. dynamischen Beanspruchungen hervorragend sind und somit dem Reifen optimale Eigenschaften verleihen, obwohl ihre elektrische Ableitfähigkeit gering ist. Da die leitfähige Zone filmschichtartig, d. h., bezogen auf die axiale Ausdehnung des Fahrzeugreifens nur ca. 0,01 bis 2 mm, vorzugsweise 0,03 - 0,5 mm, einnimmt, hat diese Zone keinen Einfluß auf die Fahreigenschaften des Fahrzeugreifens. Aufgrund des umlaufenden Vorhandenseins dieser filmschichtartigen Zone in der Bodenaufstandsfläche können elektrostatische Ladungen jederzeit abgeleitet werden. Der Begriff 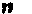 umlaufend" bedeutet, daß zumindest eine filmschichtartige Zone im wesentlichen zusammenhängend in Reifenumfangsrichtung vorhanden ist. Diese filmschichtartige Zone wird vor der Vulkanisation des Fahrzeugreifens in den grünen Laufstreifen eingebracht. Dabei ist es möglich, die Trennflächen mit einem messerartig wirkenden Gebilde zu erzeugen. Nach der Erzeugung dieser Trennflächen wird auf eine oder auf beide Trennflächen eine Lösung aus Kautschuk und/oder Kunststoff eingebracht. Dabei ist es möglich, daß es sich hierbei um eine leitfähige z. B. rußhaltige Kautschukmischung, die z. B. mit Benzin in Lösung gebracht wird, handelt. Bei der Erzeugung von solchen filmschichtartigen Zonen wird optimal gewährleistet, daß während der Vulkanisation diese filmschichtartige Zone auf den Trennflächen des Laufstreifens, der aus einer ähnlichen Kautschukmischung besteht, dauerhaft verbunden werden kann. Außerdem müssen keine zusätzlichen Substanzen zur Erzeugung der filmschichtartigen Zone bereitgestellt werden, da leitfähige Gummimischungen bei der Herstellung von Fahrzeugreifen (z. B. als Gürtelgummierung) sowieso verwendet werden. Es ist aber z. B. auch möglich, daß die filmschichtartige Zone aus einem leitfähigen Polymer, wie z. B. Polyaniline oder Polypyrrole bestehen, bzw. Lösungen eingesetzt werden, die diese Substanzen aufweisen. Um eine gesicherte Ableitung von elektrostatischer Ladung aus dem Reifeninneren an die Umgebung zu gewährleisten, ist es erforderlich, daß die filmschichtartige Zone auch mit Teilen des Reifens in Kontakt steht, die leitfähig sind, um einen Ladungsfluß nicht zu unterbrechen. Diese im Reifen radial innen liegende Schicht muß daher ebenfalls einen spezifischen elektrischen Widerstand < 10⁸ Ohm x cm aufweisen.

Durch die Beschichtung von Trennflächen, die im unvulkanisierten Laufstreifen erzeugt worden sind, können leitfähige schichtartige Zonen von vorzugsweise bis zu 1 mm wiederum bevorzugt 0,03 mm bis 0,5 mm, bezogen auf die Axialerstreckung des Reifens, erzeugt werden. Das ist besonders günstig, da bisher z. B. durch Extrusion des Laufstreifens mittels eines Duplex-Extruders solch geringe Ausdehnungen nicht über den gesamten Umfang des Reifens sichergestellt werden konnte, so daß eine ausreichende Ableitung von elektrostatischer Ladung nicht gewährleistet war.

Es ist möglich, diese filmschichtartige Zone in Laufstreifen (radial äußere Schicht) von Vollgummireifen einzubringen. Die leitfähige filmschichtartige Zone kann dann z. B. mit der kompressiblen Gummischicht, die auch leitfähig ist, in Kontakt stehen.
Besonders bevorzugt ist, wenn die filmschichtartige Zone in einen Laufstreifen für Fahrzeugluftreifen eingebracht wird. Dieser Fahrzeugluftreifen besteht aus einem Laufstreifen/Gürtelpaket radial oberhalb bezüglich der Karkasse und einer luftundurchlässigen Innenseele, die sich radial unterhalb der Karkasse befindet. Des Weiteren weisen übliche Fahrzeugluftreifen zwei Wulstbereiche und Reifenseitenwände auf. Die leitfähige filmschichtartige Zone des Laufstreifens grenzt radial innen an eine ebenfalls gut leitende Gummischicht, die z. B. die zum Laufstreifen zählende Base-Gummimischung oder aber auch die Gummierung der Festigkeitsträger des Gürtelpaketes sein kann. Zum Gürtelpaket gehören eine Bandage und/oder der Gürtel eines Fahrzeugluftreifens. Es ist aber auch möglich, daß die filmschichtartige Zone radial innen an Festigkeitsträgern des Gürtelpaketes grenzt oder aber auch mit Reifenseitenteilen (Flügel, Seitenwand) in Kontakt steht.

Vorteilhafterweise wird die Trennfläche im Laufstreifen für Fahrzeugluftreifen in der Art erzielt, daß für die Extrusion des Laufstreifens das Extruderwerkzeug am ausstoßseitigen Ende des Extruders in der Art geformt ist, daß durch zumindest ein stiftartiges Gebilde, das zumindest eine Öffnung aufweist, zumindest die Laufstreifenschicht, die im vulkanisierten Zustand einen spezifischen elektrischen Widerstand > 10¹⁰ Ohm x cm aufweist, der austretenden Laufstreifenmischung durchtrennt wird und die Trennflächen mit einer aus der Öffnung des stiftartigen Gebildes austretenden Lösung aus Kautschuk und/oder Kunststoff, die im vulkanisierten Zustand einen spezifischen elektrischen Widerstand < 10⁸ Ohm x cm aufweist, benetzt werden und dass nach dem Passieren des stiftartigen Gebildes aufgrund des Extrusionsdruckes die entstandenen Trennflächen der Laufstreifenmischung wieder miteinander verbunden werden.

Durch dieses Verfahren wird es möglich, gleich nach der Extrusion des Laufstreifens diesen in der Art zu teilen, daß zumindest die im vulkanisierten Zustand radial äußere schlecht leitende Laufgummischicht durchtrennt wird. Durch eine einfache Maßnahme am Extruderausgang, nämlich das Einsetzen eines oder mehrerer stiftartigen Gebilde, werden verfahrenstechnisch sehr einfach Trennflächen im Laufstreifen erzielt, wobei nach dem Einbringen der leitfähigen Lösung aus Kautschuk und/oder Kunststoff die entstandenen Trennflächen unter Ausnutzung des Extrusionsdruckes wieder zusammengefügt werden.

Das stiftartige Gebilde kann sowohl einseitig als auch beidseitig im Bereich zwischen Vorleiste und Endleiste des Extruderwerkzeuges befestigt werden. Wird das stiftartige Gebilde im Bereich zwischen Vorleiste und Endleiste beidseitig befestigt, so wird der extrudierte Laufstreifen über seine gesamte Dicke längsseitig, d. h. bezogen auf den fertigen Reifen, in Umlaufrichtung getrennt. Somit können z. B. in einteilige Laufstreifen (kein Cap- und Baseaufbau) filmschichtartige Zonen über dessen gesamte Dicke eingebracht werden. Es ist aber auch möglich, die Öffnungen des stiftartigen Gebildes, aus denen die Lösung aus Kautschuk und/oder Kunststoff austreten kann, in der Art anzuordnen, daß es nur möglich wird, die Trennfläche des Teils des Laufstreifens zu benetzen, der im vulkanisierten Zustand einen spezifischen elektrischen Widerstand > 10¹⁰ Ohm x cm (Cap) aufweist. So wird zwar auch in dem Teil des Laufstreifens, der gut leitfähig ist (Base), eine Trennfläche erzeugt, jedoch wird diese nach dem Passieren des stiftartigen Gebildes durch den Extrusionsdruck auch wieder zusammengedrückt ohne daß eine Lösung aus Kautschuk und/oder Kunststoff zwischen den Trennflächen eingebracht wurde. Prinzipiell entsteht aber auch kein Nachteil, wenn auch der leitfähige Teil des Laufstreifens die erfindungsgemäße filmschichtartige Zone aufweist. Wenn das stiftartige Gebilde im Bereich zwischen Vor- und Endleiste des Extruderwerkzeuges nur auf einer Seite befestigt ist, wird nur der Teil des Laufstreifens getrennt, bis zu dessen Höhe sich das stiftartige Gebilde befindet, so daß der Laufstreifen nicht über seine gesamte Dicke durchtrennt wird.

Das zumindest eine Öffnung aufweisende stiftartige Gebilde kann verschiedenartig geformt sein. So kann es über seine gesamte Länge hohl sein und dessen Mantel durch ein oder mehrere schlitz- oder lochförmige Öffnungen durchbrochen sein. Es ist aber auch möglich, daß das stiftartige Gebilde Kanäle aufweist, die radial außen des stiftartigen Gebildes enden. So können die Kanäle als auch die Öffnungen verschiedenste Geometrien aufweisen. So sind z. B. runde, Dreiecks-, Vierecks-Formen möglich. Aber auch ellipsenartige oder mehreckige Formen sind denkbar. Das stiftartige Gebilde an sich kann ebenfalls vielfältige Querschnitte aufweisen. So sind ebenfalls runde, ellipsenförmige, drei-, vier-, und mehreckige Formen möglich.

Es ist auch möglich, daß der Fahrzeugreifen nicht nur eine umlaufende filmschichtartige Zone aufweist, sondern daß bei dessen Herstellung mehrere stiftartige Gebilde den Laufstreifen durchtrennen, so daß dadurch mehrere filmschichtartige Zonen im vulkanisierten Reifen umlaufend vorhanden sein können. Das hat natürlich den Vorteil, daß, obwohl mehrere filmschichtartige Zonen in Axialrichtung des Reifens vorhanden sind, die Eigenschaften des Reifens hinsichtlich z. B. des Rollwiderstands oder des Naßrutschverhaltens nicht negativ beeinflußt werden, da die filmschichtartigen Zonen nur eine sehr geringe Fläche der mit der Fahrbahn in Berührung kommenden Fläche bilden. Gleichzeitig wird aber eine höhere Ableitfähigkeit gesichert.

Ein weiteres Verfahren zur Erzeugung einer filmschichtartigen Zone in Fahrzeugluftreifen ist darin zu sehen, daß außerhalb des Extruders zumindest die Laufstreifenschicht des extrudierten Laufstreifens längsseitig mittels eines Schneidwerkzeuges durchtrennt wird, die im vulkanisierten Zustand einen spezifischen elektrischen Widerstand >10¹⁰ Ohm x cm aufweist und die entstandenen Trennflächen des Laufstreifens mit einer Lösung aus Kautschuk und/oder Kunststoff benetzt werden, die im vulkanisierten Zustand einen spezifischen elektrischen Widerstand <10⁸ Ohm x cm aufweist. Somit wird es möglich, nach der Extrusion des Laufstreifens vor oder nach einem Kalandrierprozeß Trennflächen in dem Laufstreifen zu erzeugen. Diese Trennflächen können z. B. mittels eines Messers oder eines Laserstrahls erzeugt werden. Durch das Einbringen von Trennflächen, die mit einer Lösung aus Kautschuk und/oder Kunststoff benetzt werden, mittels eines Schneidwerkzeuges wird es möglich, verschiedene Schnittkonturen in den Laufstreifen einzubringen, so daß eine Anpassung an das Profil des späteren Reifens ermöglicht wird. Es ist dabei denkbar, daß die Schnittführung so erfolgt, daß im vulkanisierten Zustand der Reifen umlaufend, insbesondere in erhabenen Abschnitten des Profils, eine filmschichtartige leitfähige Zone aufweist. Dabei werden die Schnittkonturen im wesentlichen zusammenhängend erzeugt. So sind z. B., bezogen auf die Quererstreckung des Laufstreifens, sinusförmige Schnittkonturen denkbar.

Vorteilhafterweise soll das Schneidwerkzeug ein Messer sein. Dieses kann beweglich, z. B. an einem Schlitten, gelagert sein. Dabei ist es möglich, daß der Laufstreifen bei der Erzeugung der Trennflächen sich ebenfalls bewegt oder aber auch sich in Ruhe befindet. Somit wird also eine freie Gestaltung der Schnittkonturen gewährleistet. Um den Schnittvorgang möglichst einfach zu gestalten, ist es vorteilhaft, wenn das Messer beheizt wird. Die Form der Messer kann unterschiedlich sein. So finden Scheibenmesser oder aber auch Skalpelle Anwendung.

Wird als Schneidwerkzeug ein Laserstrahl verwendet, mit denen höhere Standzeiten als mit Messern erreicht werden, können präzisere Schnittkonturen erzielt werden.

Vorteilhafterweise wird nach dem Benetzen der Trennflächen des extrudierten Laufstreifens, die durch den Schnitt erzeugt wurden, die Trennflächen durch eine Walzenbelastung zusammengeführt. Damit wird die Stabilität des unvulkanisierten Laufstreifens erhöht, so daß dieser unkompliziert in herkömmlicher Art und Weise auf den Teilreifenrohling aufgelegt werden kann. Als Walzen können z. B. konische Walzen oder Scheibenwalzen angewendet werden.

Im Folgenden sollen Ausführungsbeispiele die Erfindung näher erläutern.

Es zeigt:
- Fig. 1: Schematisch das ausstoßseitige Ende des Extruders, bei dem sich im Bereich zwischen Vor- und Endleiste ein stiftartiges Gebilde befindet (Querschnitt).
- Fig. 2: Den Querschnitt eines stiftartigen Gebildes.
- Fig. 3: Schematisch das Prinzip der Erzeugung einer filmschichtartigen Zone durch ein Schneidwerkzeug in einen unvulkanisierten Laufstreifen (Draufsicht).
- Fig. 4: Verschiedene Konturen, die in den unvulkanisierten Laufstreifen mittels eines Schneidwerkzeuges eingebracht werden können (Draufsicht).

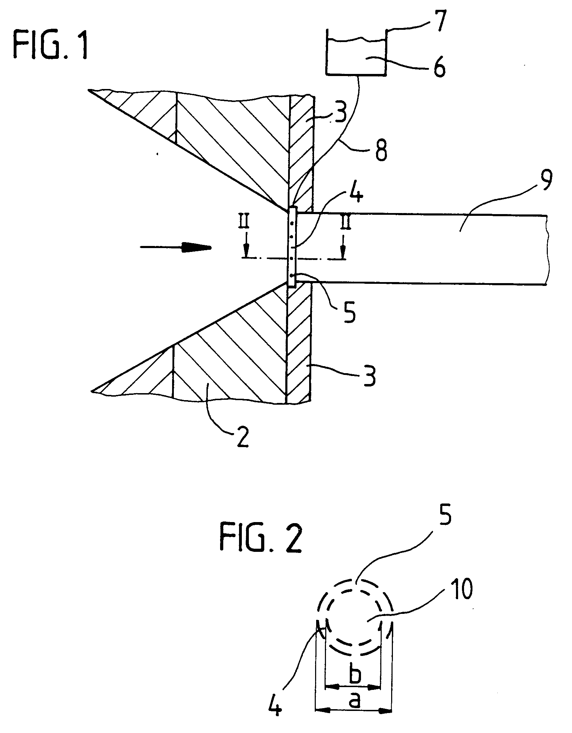

Die Figur 1 stellt das ausstoßseitige Ende eines nicht näher bezeichneten Extruders dar. Die Kautschukmischung wird in Pfeilrichtung aus dem Extruder gefördert und passiert die Vorleiste 2. Diese Vorleiste 2 hat die Aufgabe, evtl. verschiedene Kautschukmischungen zusammenzuführen und gleichzeitig vorzuformen. Die sich an die Vorleiste 2 anschließende Endleiste 3 gibt der Kautschukmischung die Endform. Zwischen den sich gegenüberstehenden Endleisten 3 ist ein stiftartiges Gebilde 4 befestigt. Dabei ist es auch möglich, daß das stiftartige Gebilde 4 zwischen den sich gegenüberstehenden Vorleisten 2 angebracht ist bzw. genau zwischen Vorleisten 2 und Endleisten 3. Auch ist eine schräge Anbringung zwischen der sich gegenüberstehenden Vor- und Endleiste denkbar. Das stiftartige Gebilde 4 weist über seine gesamte Länge schlitz- oder lochförmige Öffnungen 5 auf. Über eine Leitung 8 wird der Innenraum des stiftartigen Gebildes 4 mit einer nach der Vulkanisation leitfähigen Kautschuklösung 6 versorgt, die sich in einem Vorratsbehälter 7 befindet. Da der Innenraum des stiftartigen Gebildes 4 hohl ist, besteht die Möglichkeit über eine nicht dargestellte Dosiereinrichtung eine definierte Menge an Kautschuklösung 6 in das stiftartige Gebilde 4 laufen zu lassen, die dann durch die Öffnungen 5 aus dem stiftartigen Gebilde 4 austreten kann. Die Kautschukmischung des Laufstreifens 9 passiert das stiftartige Gebilde 4, das einerseits die Trennflächen herstellt und andererseits diese gleichzeitig mit der Lösung 6 benetzt. Nach dem Passieren des stiftartigen Gebildes 4 werden die Trennflächen aufgrund des Extrusionsdruckes materialschlüssig geschlossen.

In der Figur 2 ist der Querschnitt des stiftartigen Gebildes 4 mit Öffnungen 5 abgebildet. Hierbei handelt es sich um ein Rohr, vorzugsweise aus Metall, dessen Außendurchmesser a ca. 1 bis 10 mm, der Innendurchmesser b ca. 0,5 bis 9 mm betragen kann. Durch diese Maße wird der Hohlraum 10 bestimmt, der zur Aufnahme und zum Transport der Kautschuklösung 6 dient. Durch die Öffnungen 5 (z. B. kreisförmig mit einem Durchmesser von 0,1 mm) kann die Kautschuklösung 6 ausströmen.

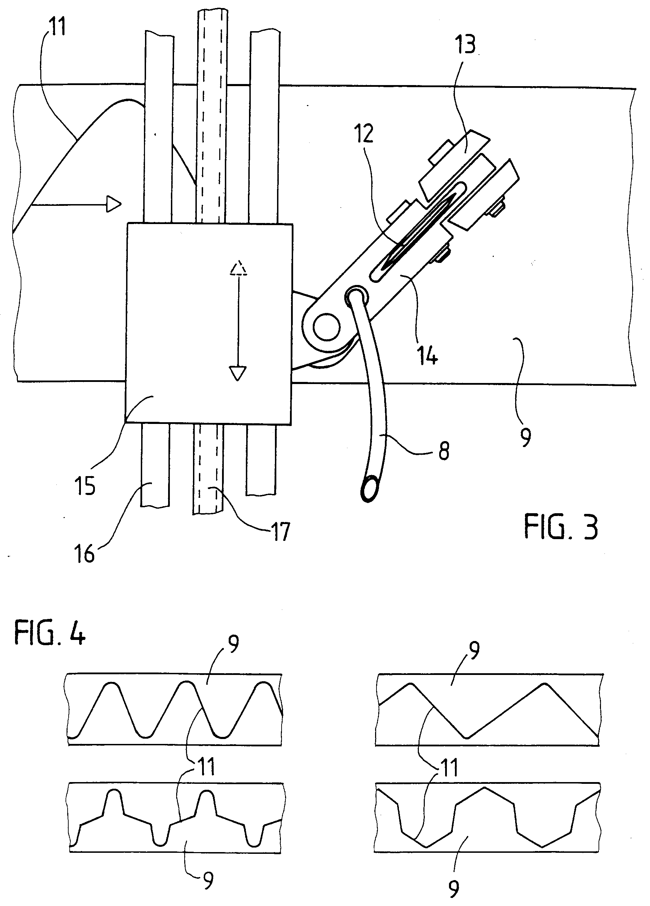

In der Figur 3 ist ein weiteres Verfahren zur Herstellung von Trennflächen in unvulkanisierte Laufstreifen und das Benetzen dieser Trennflächen mit einer Lösung, die im vulkanisierten Zustand leitfähig ist, dargestellt. Der in Pfeilrichtung bewegte unvulkanisierte Laufstreifen 9 wird durch ein Messer 12, das an einem Arm 14 gelagert ist, durchtrennt. Durch eine Leitung 8 wird eine Kautschuklösung aus einem nicht dargestellten Vorratsgefäß gefördert, die zwischen die erzeugten Trennflächen fließt und die filmschichtartige Zone 11 bildet. Durch Rollen 13, die sich ebenfalls an dem Arm 14 befinden, werden die entstandenen Trennflächen, zwischen denen sich die leitfähige Kautschuklösung befindet, wieder geschlossen. Der bewegliche Arm 14 ist an einem Schiffen 15 gelagert, welcher durch Linearführungen 16 geführt wird und durch eine Spindel 17 angetrieben ist. Die Bewegung des Armes 14 kann demzufolge aufgrund der Relativgeschwindigkeit zwischen Laufstreifen 9 und Schlitten 15 einstellt werden.

In der Figur 4 sind verschiedenartige Konturen dargestellt, die mit Hilfe des in der Figur 3 beschiebenen Verfahrens in einen unvulkanisierten Laufstreifen 9 eingebracht werden können.

Die mit den erfindungsgemäßen Verfahren erzeugten unvulkanisierten Laufstreifen, in denen Trennflächen eingebracht wurden, die wiederum mit einer Lösung benetzt wurden, wird es möglich, daß im vulkanisierten Zustand der Laufstreifen eines Fahrzeugreifens eine umlaufende filmschichtartige Zone aufweist, die eine ausreichende Ableitfähigkeit von elektrostatischer Ladung bewirkt.

## Patentansprüche

1. Fahrzeugreifen zur Montage auf eine elektrisch leitende Felge, der eine radial äußere Laufgummischicht aufweist, die einen spezifischen elektrischen Widerstand >10¹⁰ Ohm x cm besitzt,
**dadurch gekennzeichnet,** dass
die schlecht leitende radial äußere Laufgummischicht zumindest eine in Reifenumfangsrichtung umlaufende radial außen die Fahrbahn berührende und radial innen mit zumindest einen Teil des Reifens, der einen spezifischen elektrischen Widerstand < 10⁸ Ohm x cm aufweist, in Verbindung stehende filmschichtartige Zone aufweist, deren Werkstoff einen spezifischen elektrischen Widerstand < 10⁸ Ohm x cm besitzt, die bei der Herstellung des Reifens durch eine auf Trennflächen des Laufstreifens aufgebrachte Lösung aus Kautschuk und/oder Kunststoff erzeugt worden ist.

2. Fahrzeugreifen nach Anspruch 1, dadurch gekennzeichnet, dass die filmschichtartige Zone eine axiale Ausdehnung bis zu 1 mm aufweist.

3. Fahrzeugreifen nach Anspruch 2, dadurch gekennzeichnet, dass die filmschichtartige Zone eine axiale Ausdehnung zwischen 0,03 mm und 0,5 mm aufweist.

4. Fahrzeugreifen nach zumindest einem der vorherigen Ansprüche, dadurch gekennzeichnet, dass der Fahrzeugreifen ein Luftreifen mit einem Laufstreifen/Gürtelpaket radial oberhalb bezüglich der Karkasse ist, dass sich im Laufstreifen umlaufend eine filmschichtartige Zone befindet, deren Werkstoff einen spezifischen elektrischen Widerstand <10⁸ Ohm x cm besitzt, und die radial außen die Fahrbahn berührt und die radial innen mit einer gut leitenden Gummischicht oder mit Festigkeitsträgem des Gürtelpaketes in Verbindung steht.

5. Verfahren zur Herstellung eines Fahrzeugluftreifens nach Anspruch 4, dadurch gekennzeichnet, dass für die Extrusion des Laufstreifens (9) das Extruderwerkzeug am ausstoßseitigen Ende des Extruders in der Art geformt ist, dass durch zumindest ein stiftartiges Gebilde (4), das zumindest eine Öffnung (5) aufweist, zumindest die Laufstreifenschicht, die im vulkanisierten Zustand einen spezifischen elektrischen Widerstand > 10¹⁰ Ohm x cm aufweist, der austretenden Laufstreifenmischung durchtrennt wird und die Trennflächen mit einer aus der Öffnung (5) des stiftartigen Gebildes (4) austretenden Lösung (6) aus Kautschuk und/oder Kunststoff, die im vulkanisierten Zustand einen spezifischen elektrischen Widerstand < 10⁸ Ohm x cm aufweist, benetzt werden und dass nach dem Passieren des stiftartigen Gebildes (4) aufgrund des Extrusionsdruckes die entstandenen Trennflächen der Laufstreifenmischung wieder miteinander verbunden werden.

6. Verfahren zur Herstellung eines Fahrzeugluftreifens nach Anspruch 5, dadurch gekennzeichnet, dass das stiftartige Gebilde (4) beidseitig im Bereich zwischen Vorleiste (2) und Endleiste (3) des Extruderwerkzeuges befestigt ist, so dass der extrudierte Laufstreifen über seine gesamte Dicke längsseitig getrennt wird.

7. Verfahren zur Herstellung eines Fahrzeugluftreifens nach Anspruch 5, dadurch gekennzeichnet, dass das stiftartige Gebilde (4) einseitig im Bereich zwischen Vorleiste (2) und Endleiste (3) des Extruderwerkzeuges befestigt ist, so dass der extrudierte Laufstreifen nicht vollständig über seine gesamte Dicke längsseitig durchtrennt wird.

8. Vorrichtung für ein Verfahren zur Herstellung eines Fahrzeugluftreifens nach zumindest einem der Ansprüche 5 bis 7, dadurch gekennzeichnet, dass die Extrusion des Laufstreifens an einem Extruder erfolgt, dessen Extruderwerkzeug am ausstoßseitigen Ende des Extruders ein stiftartiges Gebilde (4) aufweist, das zumindest eine Öffnung (5) besitzt.

9. Vorrichtung für ein Verfahren zur Herstellung eines Fahrzeugluftreifens nach Anspruch 8, dadurch gekennzeichnet, dass das stiftartige Gebilde (4) innen hohl ist.

10. Vorrichtung für ein Verfahren zur Herstellung eines Fahrzeugluftreifens nach Anspruch 8 und/oder 9, dadurch gekennzeichnet, dass das stiftartige Gebilde (4) ein oder mehrere schlitz- oder lochförmige Öffnungen (5) aufweist.

11. Verfahren zur Herstellung eines Fahrzeugluftreifens nach Anspruch 4, dadurch gekennzeichnet, dass außerhalb des Extruders zumindest die Laufstreifenschicht des extrudierten Laufstreifens (9) längsseitig mittels eines Schneidwerkzeuges (12) durchtrennt wird, die im vulkanisierten Zustand einen spezifischen elektrischen Widerstand >10¹⁰ Ohm x cm aufweist und die entstandenen Trennflächen des Laufstreifens mit einer Lösung aus Kautschuk und/oder Kunststoff benetzt werden, die im vulkanisierten Zustand einen spezifischen elektrischen Widerstand <10⁸ Ohm x cm aufweist.

12. Verfahren zur Herstellung eines Fahrzeugluftreifens nach Anspruch 11, dadurch gekennzeichnet, dass die Schnittkonturen bezogen auf die Quererstreckung des Laufstreifens (9) sinusförmig erzeugt werden.

13. Verfahren zur Herstellung eines Fahrzeugluftreifens nach zumindest einem der Ansprüche 11 und/oder 12, dadurch gekennzeichnet, dass als Schneidwerkzeug (12) ein Messer verwendet wird.

14. Verfahren zur Herstellung eines Fahrzeugluftreifens nach Anspruch 13, dadurch gekennzeichnet, dass das Messer beheizt wird.

15. Verfahren zur Herstellung eines Fahrzeugluftreifens nach zumindest einem der Ansprüche 11 bis 14, dadurch gekennzeichnet, dass als Schneidwerkzeug (12) ein Laserstrahl verwendet wird.

16. Verfahren zur Herstellung eines Fahrzeugluftreifens nach zumindest einem der Ansprüche 11 bis 15, dadurch gekennzeichnet, dass nach dem Benetzen der Trennflächen des extrudierten Laufstreifens (9), die durch den Schnitt erzeugt wurden, die Trennflächen durch eine Walzenbelastung zusammengeführt werden.
